(19) Europäisches Patentamt / European Patent Office / Office européen des brevets

(11) **EP 3 970 964 A1**

(12) **EUROPÄISCHE PATENTANMELDUNG**

(43) Veröffentlichungstag:
    **23.03.2022 Patentblatt 2022/12**

(21) Anmeldenummer: **21196932.4**

(22) Anmeldetag: **15.09.2021**

(51) Internationale Patentklassifikation (IPC):
    ***B32B 15/01*** (2006.01)    ***C22C 21/04*** (2006.01)
    ***C22C 21/08*** (2006.01)    ***C22C 21/10*** (2006.01)

(52) Gemeinsame Patentklassifikation (CPC):
    **B32B 15/016; C22C 21/04; C22C 21/08; C22C 21/10**

(84) Benannte Vertragsstaaten:
    **AL AT BE BG CH CY CZ DE DK EE ES FI FR GB GR HR HU IE IS IT LI LT LU LV MC MK MT NL NO PL PT RO RS SE SI SK SM TR**
    Benannte Erstreckungsstaaten:
    **BA ME**
    Benannte Validierungsstaaten:
    **KH MA MD TN**

(30) Priorität: **18.09.2020 DE 102020124429**

(71) Anmelder: **Speira GmbH**
    **41515 Grevenbroich (DE)**

(72) Erfinder:
    • **LENTZ, Martin Christoph**
      **41515 Grevenbroich (DE)**
    • **BRINKMAN, Henk-Jan**
      **41515 Grevenbroich (DE)**

(74) Vertreter: **Maiwald Patent- und Rechtsanwaltsgesellschaft mbH Elisenhof Elisenstraße 3 80335 München (DE)**

(54) **ALUMINIUMVERBUNDWERKSTOFF FÜR CRASHANWENDUNGEN**

(57) Die vorliegende Anmeldung betrifft einen Aluminiumverbundwerkstoff mit einem Aluminiumkern und einer Aluminiumplattierung. Der Verbundwerkstoff ist insbesondere für Crash-Anwendungen geeignet.

**EP 3 970 964 A1**

**Beschreibung**

**HINTERGRUND DER ERFINDUNG**

Gebiet der Erfindung

Die vorliegende Anmeldung betrifft einen Aluminiumverbundwerkstoff mit einem Aluminiumkern und einer Aluminiumplattierung.

Hintergrund

Im Automobilbau werden beständig Lösungen gesucht, die eine Gewichtseinsparung ermöglichen. Insbesondere hierbei bietet sich die Verwendung von Aluminium gegenüber Bauteilen aus Stahl, wie beispielsweise Karosserieblechen, an. Dabei ist jedoch zu berücksichtigen, dass Aluminium leichter verformbar ist und daher bei einem Unfall weniger Energie absorbieren kann und daher die Insassen möglicherweise weniger geschützt sind. Abhilfe kann hier die Verwendung von Aluminiumverbundwerkstoffen leisten.
Ein derartiger Aluminiumverbundwerkstoff ist beispielsweise aus der WO 2014/068015 A1 bekannt. Derartige Aluminiumverbundwerkstoffe bestehen üblicherweise aus einem Aluminiumkern und einer ein- oder beidseitig aufgebrachten Aluminiumbeschichtung aus zwei unterschiedlichen Aluminiumlegierungen, um auf diese Weise die Kaltumformbarkeit deutlich verbessern zu können. Die Festigkeiten der Aluminiumverbundwerkstoffe des Standes der Technik sind jedoch zu gering für Crashanwendungen, die eine hohe Festigkeit erfordern.
Daher besteht weiterhin ein Bedarf an Bauteilen aus Aluminium, die stark erhöhte Anforderungen an die mechanische Belastbarkeit, wie beispielsweise beim Crashverhalten, erfüllen.

**ZUSAMMENFASSUNG**

In einem ersten Aspekt stellt die vorliegende Offenbarung einen Aluminiumverbundwerkstoff bereit, umfassend

- einen Aluminiumkern mit einer Aluminiumkernlegierung und
- eine ein- oder beidseitig auf dem Aluminiumkern aufgebrachte Aluminiumplattierung mit einer Aluminiumplattierungslegierung,

wobei

- die Aluminiumkernlegierung eine Härte $\geq$ 110 HV 0,025 aufweist,
- die Aluminiumplattierungslegierung eine Härte $\leq$ 50 HV 0,025 aufweist,
- das Verhältnis der Härte der Aluminiumkernlegierung zur Härte der Aluminiumplattierungslegierung $\geq$ 3 ist, und
- die Aluminiumplattierung jeweils eine Dicke von 5-20 % der Gesamtdicke des Verbundwerkstoffes aufweist.

Ein zweiter Aspekt der vorliegenden Offenbarung betrifft einen Bestandteil eines Kraftfahrzeugs umfassend einen Aluminiumverbundwerkstoff gemäß dem ersten Aspekt mit allen seinen bevorzugten Ausführungsformen.
Schließlich betrifft ein dritter Aspekt der vorliegenden Offenbarung einen Aluminiumverbundwerkstoff-Rohling, der vorzugsweise in einem Zustand T4 mit allen Unterzuständen vorliegt, und der durch Überführen in einen Zustand nach Warmauslagern, vorzugsweise in einen Zustand T6 mit allen Unterzuständen, in einen Aluminiumverbundwerkstoff gemäß dem ersten Aspekt mit allen bevorzugten Ausführungsformen versetzt werden kann.

**AUSFÜHRLICHE BESCHREIBUNG**

Die vorliegende Offenbarung stellt in einem ersten Aspekt einen Aluminiumverbundwerkstoff bereit, umfassend

- einen Aluminiumkern mit einer Aluminiumkernlegierung und
- eine ein- oder beidseitig auf dem Aluminiumkern aufgebrachte Aluminiumplattierung mit einer Aluminiumplattierungslegierung,

wobei

- die Aluminiumkernlegierung eine Härte $\geq$ 110 HV 0,025 aufweist,
- die Aluminiumplattierungslegierung eine Härte $\leq$ 50 HV 0,025 aufweist,

- das Verhältnis der Härte der Aluminiumkernlegierung zur Härte der Aluminiumplattierungslegierung ≥ 3 ist, und
- die Aluminiumplattierung jeweils eine Dicke von 5-20 % der Gesamtdicke des Verbundwerkstoffes aufweist.

Die Erfinder der vorliegenden Offenbarung haben überraschenderweise herausgefunden, dass sich die Eigenschaften, insbesondere der Biegewinkel, eines Aluminiumblechs positiv beeinflussen lassen, wenn das Aluminiumblech als Aluminiumverbundwerkstoff bereitgestellt wird.

Dabei wird auf einem Aluminiumkern, im Folgenden auch kurz als Kern bezeichnet, eine Aluminiumplattierung, im Folgenden auch kurz als Plattierung bezeichnet, aufgebracht. Diese Aluminiumplattierung kann auf einer Seite des Aluminiumkerns oder auf beiden Seiten des Aluminiumkerns aufgebracht werden, d. h., die Aluminiumplattierung ist ein- oder beidseitig auf dem Aluminiumkern aufgebracht. Dabei wird die Aluminiumplattierung jeweils direkt auf den Aluminiumkern aufgebracht, d.h. in direktem Kontakt mit dem Aluminiumkern und ohne dazwischen liegende Schicht.

In einer bevorzugten Ausführungsform des ersten Aspekts ist die Aluminiumplattierung auf beiden Seiten des Aluminiumkerns aufgebracht, d. h. beidseitig.

Härte der Aluminiumlegierungen

Die Zusammensetzung des Kerns und der Plattierung des Aluminiumverbundwerkstoffs unterscheiden sich dabei. Bei beiden Stoffen handelt es sich jeweils um eine Aluminiumlegierung mit unterschiedlicher Zusammensetzung und damit verbundenen unterschiedlichen Eigenschaften. Insbesondere unterscheiden sich die beiden Legierungen, d. h. die Aluminiumlegierung für den Kern (Aluminiumkernlegierung) und die Legierung für die Plattierung (Aluminiumplattierungslegierung), hinsichtlich ihrer Härte. Wird im Rahmen dieser Offenbarung von der Härte einer Legierung gesprochen, so betrifft dies die Härte nach Vickers HV 0,025, gemessen nach DIN EN ISO 6507-1:2018-07.

Gemäß der vorliegenden Offenbarung besitzt die Aluminiumkernlegierung eine Härte H von mindestens 110 HV 0,025, d.h., H ≥ 110 HV 0,025, und die Aluminiumplattierungslegierung eine Härte von höchstens 50 HV 0,025, d.h., H ≤ 50 HV 0,025. Darüber hinaus besteht ein Zusammenhang zwischen den beiden Härten der Aluminiumkernlegierung und der Aluminiumplattierungslegierung in der Form, dass das Verhältnis Q der Härte der Aluminiumkernlegierung ($H_{Kern}$) zur Härte der Aluminiumplattierungslegierung ($H_{Plattierung}$) mindestens drei beträgt, d.h., Q ≥ 3. Durch die Wahl der Härte der Aluminiumkernlegierung und der Aluminiumplattierungslegierung können die Eigenschaften des Aluminiumverbundwerkstoffs in nicht zu erwartender Weise beeinflusst werden. Diese positiven Eigenschaften zeigt der Aluminiumverbundwerkstoff, beispielsweise in Form eines Blechs, gegenüber einem Blech aus lediglich einer Aluminiumlegierung, d. h. einem monolagigen Blech mit homogener Zusammensetzung, aber auch gegenüber aus dem Stand der Technik bekannten Aluminiumverbundwerkstoffen.

Die Härte der Aluminiumlegierung nach Vickers HV 0,025 wird gemäß oben genannter DIN-Vorschrift gemessen. Werden mehrere Messwerte bestimmt, so soll das arithmetische Mittel der Messwerte als die Härte angenommen werden. Dabei ist darauf zu achten, dass der Abstand von der Grenzfläche der beiden Aluminiumlegierungen ausreichend groß ist, um nicht eine zu hohe bzw. zu niedrige Härte aufgrund des Einflusses der benachbarten Legierung zu messen.

In einer bevorzugten Ausführungsform beträgt die Härte der Aluminiumkernlegierung mindestens 120 HV 0,025, weiter bevorzugt mindestens 130 HV 0,025. In einer anderen bevorzugten Ausführungsform beträgt die Härte der Aluminiumkernlegierung höchstens 170 HV 0,025, weiter bevorzugt höchstens 160 HV 0,025, weiter bevorzugt höchstens 155 HV 0,025, und noch weiter bevorzugt höchstens 150 HV 0,025.

Es wurde überraschenderweise festgestellt, dass die Aluminiumverbundwerkstoffe der vorliegenden Offenbarung ein insbesondere für Anwendungen im Automobilbereich, vor allem bei Unfällen (Crash-Anwendung), eine vorteilhafte Eigenschaft besitzen. Um im CrashVerhalten vorteilhafte Eigenschaften zu besitzen müssen die verwendeten Werkstoffe zum einen eine gewisse Festigkeit besitzen, jedoch gleichzeitig einen hohen Biegewinkel. Diese beiden Eigenschaften verhalten sich gegenläufig und die Einstellung sowohl einer hohen Festigkeit als auch gleichzeitig eines hohen Biegewinkels bei gleichzeitig geringem Gewicht und guter Verarbeitbarkeit ist für einen Werkstoff schwierig zu erreichen.

Wie bereits oben ausgeführt beträgt das Verhältnis Q der Härte der Aluminiumkernlegierung zur Härte der Aluminiumplattierungslegierung im Verbundwerkstoff mindestens drei:

$$Q = H_{Kern}/H_{Plattierung} \geq 3$$

Die Wahl der jeweiligen Härte der Aluminiumkernlegierung und der Aluminiumplattierungslegierung ist dabei innerhalb der gegebenen Grenzen frei, mit der Einschränkung, dass das Verhältnis Q den gewünschten Wert erzielt. Wird dabei beispielsweise die Aluminiumkernlegierung derart gewählt, dass die Härte 120 HV 0,025 beträgt, so darf die Aluminiumplattierungslegierung höchsten eine Härte von 40 HV 0,025 besitzen, um ein Verhältnis von Q ≥ 3 zu erzielen.. Wird beispielsweise umgekehrt die Aluminiumplattierungslegierung derart gewählt, dass die Härte 50 HV 0,025 beträgt, so muss die Aluminiumkernlegierung mindestens eine Härte von 150 HV 0,025 besitzen, um ein Verhältnis von Q ≥ 3 zu erzielen. Mit der Bereitstellung eines Aluminiumverbundwerkstoffs unter den gegebenen Einschränkungen für die Härte der Legierungen (jeweilige Härte sowie Verhältnis Q) kann diese Anforderung der Automobilindustrie erfüllt werden.

In einer bevorzugten Ausführungsform beträgt das Verhältnis Q mindestens vier, d. h., Q ≥ 4, bevorzugt mindestens 4,5, d.h., Q ≥ 4,5, weiter bevorzugt liegt Q im Bereich von 4,5 bis 7, d.h., 4,5 ≤ Q ≤ 7, weiter bevorzugt liegt Q im Bereich von 4,5 bis 5,5, d.h., 4,5 ≤ Q ≤ 5,5.

In einer bevorzugten Ausführungsform einer beidseitig aufgebrachten Aluminiumplattierung können sich die beiden Aluminiumplattierungslegierungen unterscheiden, so dass ein dreilagiger Verbundwerkstoff mit der Schichtenfolge A-B-C vorliegt. Die beiden Plattierungslegierungen A und C auf den beiden Seiten des Aluminiumkerns B können dabei jeweils unabhängig voneinander ausgewählt werden, insbesondere aus den unten genannten bevorzugten Ausführungsformen der Aluminiumplattierungslegierungen. Die unterschiedliche Auswahl der Plattierungslegierungen kann zu unterschiedlichen Zwecken erfolgen. Beispielsweise kann auf der einen Seite eine reinere Plattierungslegierung ausgewählt werden, um die Eigenschaften bezüglich der Verformbarkeit und Festigkeit zu verändern, während auf der anderen Seite beispielsweise eine mit Zink legierte Plattierungslegierung verwendet wird, um z.B. den Korrosionsschutz zu verbessern.

Liegt ein Verbundwerkstoff mit einer Schichtenfolge A-B-C vor, so muss jeweils das Verhältnis Q der Härte der Aluminiumkernlegierung zur Härte der Aluminiumplattierungslegierung im Verbundwerkstoff mindestens drei betragen, also

$$Q = H_{Kern-B}/H_{Plattierung-A} \geq 3$$

und

$$Q = H_{Kern-B}/H_{Plattierung-C} \geq 3.$$

Weitere Eigenschaften

Die Bleche der Verbundwerkstoffe der vorliegenden Offenbarung zeigen hinsichtlich Biegewinkel und Brucheinschnürung deutlich verbesserte Werte, bei gleichzeitig hoher Festigkeit. Diese Eigenschaftskombination ermöglicht beispielsweise den Einsatz der Verbundwerkstoffe der vorliegenden Offenbarung als Bleche im Automobilbau, da sie vorteilhafte Eigenschafen insbesondere bei Crash-Tests erwarten lassen.

Gemäß der vorliegenden Offenbarung ist bei einem Aluminiumverbundwerkstoff auf einem Aluminiumkern ein- oder beidseitig eine Aluminiumplattierung aufgebracht. Die Aluminiumplattierung A kann lediglich auf einer Seite des Aluminiumkerns B aufgebracht werden, wodurch ein zweilagiger Verbundwerkstoff mit der Schichtenfolge A-B entsteht. Ist hingegen die Aluminiumplattierung auf beiden Seiten des Aluminiumkerns aufgebracht, liegt ein dreilagiger Verbundwerkstoff mit der Schichtenfolge A-B-A vor.

Bezogen auf die Gesamtdicke des Verbundwerkstoffes nimmt die Plattierung auf jeder Seite eine Dicke von 5-20 % ein. Liegt daher ein zweilagiger Verbundwerkstoff mit der Schichtenfolge A-B vor, nimmt die Plattierung eine Dicke von 5-20 %, bezogen auf die Gesamtdicke des Verbundwerkstoffes, ein. Handelt es sich hingegen um einen dreilagigen Verbundwerkstoff mit der Schichtenfolge A-B-A, nimmt jede der beiden Plattierungen jeweils eine Dicke von 5-20 % der Gesamtdicke des Verbundwerkstoffes ein, d. h., die Plattierung nimmt insgesamt (in der Summe) eine Dicke von 10-40 % der Gesamtdicke des Verbundwerkstoffes ein.

In einer bevorzugten Ausführungsform beträgt die Dicke der Aluminiumplattierung jeweils von 7-15 % der Gesamtdicke des Aluminiumverbundwerkstoffs, weiter bevorzugt von 8-12 % der Gesamtdicke, weiter bevorzugt von 9-11 % der Gesamtdicke, und weiter bevorzugt etwa 10 % der Gesamtdicke.

Sofern eine beidseitige Plattierung vorliegt, kann die Plattierung auf beiden Seiten mit derselben Dicke aufgebracht sein, oder mit einer unterschiedlichen Dicke. Bei unterschiedlicher Dicke kann die jeweilige Dicke unabhängig voneinander gewählt werden. Somit kann ein symmetrischer Querschnitt des Verbundwerkstoffes bei beidseitig gleich dick aufgetragener Plattierung vorliegen, oder ein asymmetrischer Querschnitt bei unterschiedlicher Dicke der beiden Platzierungen, wobei der Querschnitt bei einem Schnitt durch das Blech senkrecht zur Grenzfläche zwischen Kern und Plattierung erzeugt wird. In einer bevorzugten Ausführungsform ist die Plattierung auf beiden Seiten gleich dick aufgebracht.

In einer bevorzugten Ausführungsform liegt der Aluminiumverbundwerkstoff in Form eines (Metall-) Blechs vor. Dieses Aluminiumblech hat gemäß einer bevorzugten Ausführungsform eine Gesamtdicke von 0,6 mm bis 10 mm, weiter vorzugsweise von 1,0 mm bis 5 mm.

Aluminiumlegierungen

Sowohl für den Kern als auch für die Plattierung können unterschiedliche Aluminiumlegierungen verwendet werden. Dabei kommt es insbesondere auf die Eigenschaften der Legierung an, wie beispielsweise deren Festigkeit und Härte. Der Fachmann kann also gemäß diesen Eigenschaften entsprechend eine Legierung für den Kern und die Plattierung auswählen. Selbstverständlich wählt der Fachmann die beiden Legierungen unabhängig voneinander aus den gegebenen Legierungen aus.

Der Hauptbestandteil der Aluminiumlegierungen für den Kern und die Plattierung ist Aluminium. Neben den konkret mit Mengenangaben aufgeführten weiteren Bestandteilen, wie beispielsweise Si oder Fe, können die Legierungen aber auch noch weitere andere Bestandteile enthalten. Diese werden im Rahmen der vorliegenden Offenbarung als Verunreinigungen bezeichnet. Solche Verunreinigungen können beispielsweise ausgewählt sein aus V, Sc und B. Solche Verunreinigungen können in Legierung jeweils bis maximal 0,05 Gew.-% auftreten, d.h., jedes Element, das als Verunreinigung bezeichnet wird, liegt mit einem maximalen Anteil von 0,05 Gew.-% in der Legierung vor. In der Summe liegen alle Verunreinigungen insgesamt mit einem Anteil von maximal 0,15 Gew.-% vor. Es sind also jeweils maximal 0,15 Gew.-% Verunreinigungen in der Legierung vorhanden.

Die Mengenangabe Gew.-% (Gewichtsprozent) bezieht sich in der gesamten Offenbarung, sofern nicht explizit anders angegeben, jeweils auf das Gesamtgewicht der Aluminiumlegierung.

Aluminiumkernlegierung

Gemäß einer bevorzugten Ausführungsform des Aluminiumverbundwerkstoffs der vorliegenden Offenbarung ist die Aluminiumkernlegierung vom Typ AA 2xxx, AA 6xxx oder AA 7xxx, bevorzugt vom Typ AA 6xxx oder AA 7xxx. Eine besonders bevorzugte Aluminiumkernlegierung ist die Legierung AA 6010 oder AA 7021.

Gemäß einer bevorzugten Ausführungsform des Aluminiumverbundwerkstoffs der vorliegenden Offenbarung weist die Aluminiumkernlegierung die folgende Zusammensetzung auf:

| | |
|---|---|
| Si: | 0,03 - 1,5 Gew.-% |
| Fe: | ≤ 0,5 Gew.-% |
| Cu: | ≤ 2,0 Gew.-% |
| Mn: | ≤ 1,2 Gew.-% |
| Mg: | 0,4 - 2,5 Gew.-% |
| Cr: | ≤ 0,2 Gew.-% |
| Zn: | ≤ 7,5 Gew.-% |
| Zr: | ≤ 0,2 Gew.-% |

wobei die Aluminiumkernlegierung Verunreinigungen jeweils bis maximal 0,05 Gew.-% und insgesamt bis maximal 0,15 Gew.-% aufweisen kann, wobei die verbleidenden Gew.-% Aluminium sind.

Gemäß einer bevorzugten Ausführungsform des Aluminiumverbundwerkstoffs der vorliegenden Offenbarung weist die Aluminiumkernlegierung die folgende Zusammensetzung auf:

| | |
|---|---|
| Si: | 0,5 - 1,5 Gew.-% |
| Fe: | 0,01 - 0,5 Gew.-% |
| Cu: | ≤ 1,0 Gew.-% |
| Mn: | 0,01 - 1,2 Gew.-% |
| Mg: | 0,5 - 1,5 Gew.-% |
| Cr: | ≤ 0,2 Gew.-% |
| Zn: | ≤ 0,8 Gew.-% |
| Zr: | ≤ 0,2 Gew.-% |

wobei die Aluminiumkernlegierung Verunreinigungen jeweils bis maximal 0,05 Gew.-% und insgesamt bis maximal 0,15 Gew.-% aufweisen kann, wobei die verbleidenden Gew.-% Aluminium sind.

Gemäß einer bevorzugten Ausführungsform des Aluminiumverbundwerkstoffs der vorliegenden Offenbarung weist die Aluminiumkernlegierung die folgende Zusammensetzung auf:

| | |
|---|---|
| Si: | 0,5 - 1,5 Gew.-% |

(fortgesetzt)

| | |
|---|---|
| Fe: | 0,15 - 0,5 Gew.-% |
| Cu: | 0,03 - 1,0 Gew.-% |
| Mn: | 0,15 - 1,2 Gew.-% |
| Mg: | 0,5 - 1,5 Gew.-% |
| Cr: | ≤ 0,2 Gew.-% |
| Zn: | ≤ 0,8 Gew.-% |
| Zr: | ≤ 0,2 Gew.-% |

wobei die Aluminiumkernlegierung Verunreinigungen jeweils bis maximal 0,05 Gew.-% und insgesamt bis maximal 0,15 Gew.-% aufweisen kann, wobei die verbleidenden Gew.-% Aluminium sind. Insbesondere diese Legierung erlaubt einen hohen Einsatz an Schrott, d.h., Aluminiumschrott der zum Recycling in die Legierung eingebracht wird.

In einer weiter bevorzugten Ausführungsform aller oben genannten Aluminiumkernlegierungen beträgt der Anteil an Silizium (Si) mindestens 0,6 Gew.-%, weiter bevorzugt mindestens 0,65 Gew.-%, und noch weiter bevorzugt mindestens 0,7 Gew.-%.

In einer anderen weiter bevorzugten Ausführungsform aller oben genannten Aluminiumkernlegierungen beträgt der Anteil an Mangan (Mn) mindestens 0,2 Gew.-%, weiter bevorzugt mindestens 0,25 Gew.-%, und noch weiter bevorzugt mindestens 0,3 Gew.-%.

Es ist selbstverständlich, dass die oben genannten Ausführungsformen teilweise Alternativen darstellen, die unabhängig voneinander sind, jedoch auch gleichzeitig vorliegen können, wie beispielsweise die weiter bevorzugten Ausführungsformen betreffend Si oder Mn.

Aluminiumplattierunqsleqierunq

Gemäß einer bevorzugten Ausführungsform des Aluminiumverbundwerkstoffs der vorliegenden Offenbarung ist die Aluminiumplattierungslegierung vom Typ AA 8xxx, AA 7xxx, AA 3xxx oder AA 1xxx ist, bevorzugt vom Typ AA 8xxx oder AA 1xxx. Eine besonders bevorzugte Aluminiumplattierungslegierung ist die Legierung AA 8079 oder AA 1050.

Gemäß einer bevorzugten Ausführungsform des Aluminiumverbundwerkstoffs der vorliegenden Offenbarung weist die Aluminiumplattierungslegierung folgende Zusammensetzung auf:

| | |
|---|---|
| Si: | ≤ 1,5 Gew.-% |
| Fe: | ≤ 2,0 Gew.-%, vorzugsweise 0,1 - 2,0 Gew.-% |
| Cu: | ≤ 0,3 Gew.-% |
| Mn: | ≤ 1,5 Gew.-% |
| Mg: | ≤ 2,5 Gew.-% |
| Cr: | ≤ 0,2 Gew.-% |
| Zn: | ≤ 2,0 Gew.-% |
| Ti: | ≤ 0,3 Gew.-% |
| Zr: | ≤ 0,2 Gew.-% |

wobei die Aluminiumplattierungslegierung Verunreinigungen jeweils bis maximal 0,05 Gew.-% und insgesamt bis maximal 0,15 Gew.-% aufweisen kann, wobei die verbleidenden Gew.-% Aluminium sind.

In der vorgenannten Legierung ist also der Gehalt an Eisen (Fe) maximal 2 Gew.-% (≤ 2,0 Gew.-%). Vorzugsweise liegt der Eisengehalt jedoch mindestens bei 0,1 Gew.-% (0,1 — 2,0 Gew.-%).

Gemäß einer weiter bevorzugten Ausführungsform des Aluminiumverbundwerkstoffs der vorliegenden Offenbarung weist die Aluminiumplattierungslegierung folgende Zusammensetzung auf:

| | |
|---|---|
| Si: | ≤ 1,5 Gew.-% |
| Fe: | ≤ 2,0 Gew.-%, vorzugsweise 0,1 - 2,0 Gew.-% |
| Cu: | ≤ 0,3 Gew.-% |
| Mn: | ≤ 1,5 Gew.-% |
| Mg: | ≤ 1,0 Gew.-% |
| Cr: | ≤ 0,12 Gew.-% |
| Zn: | ≤ 0,5 Gew.-% |

(fortgesetzt)

| | |
|---|---|
| Ti: | ≤ 0,3 Gew.-% |
| Zr: | ≤ 0,12 Gew.-% |

wobei die Aluminiumplattierungslegierung Verunreinigungen jeweils bis maximal 0,05 Gew.-% und insgesamt bis maximal 0,15 Gew.-% aufweisen kann, wobei die verbleidenden Gew.-% Aluminium sind. Es sind also insbesondere:

| | |
|---|---|
| Mg: | ≤ 1,0 Gew.-% |
| Cr: | ≤ 0,12 Gew.-% |
| Zn: | ≤ 0,5 Gew.-% |
| Zr: | ≤ 0,12 Gew.-% |

gegenüber der zuvor genannten Aluminiumlegierung verändert.

Gemäß einer anderen weiter bevorzugten Ausführungsform des Aluminiumverbundwerkstoffs der vorliegenden Offenbarung weist die Aluminiumplattierungslegierung folgende Zusammensetzung auf:

| | |
|---|---|
| Si: | ≤ 0,3 Gew.-% |
| Fe: | ≤ 0,4 Gew.-% |
| Cu: | ≤ 0,1 Gew.-% |
| Mn: | ≤ 0,1 Gew.-% |
| Mg: | ≤ 0,1 Gew.-% |
| Cr: | ≤ 0,12 Gew.-% |
| Zn: | ≤ 0,1 Gew.-% |
| Ti: | ≤ 0,3 Gew.-% |
| Zr: | ≤ 0,12 Gew.-% |

wobei die Aluminiumplattierungslegierung Verunreinigungen jeweils bis maximal 0,05 Gew.-% und insgesamt bis maximal 0,15 Gew.-% aufweisen kann, wobei die verbleidenden Gew.-% Aluminium sind. Es sind also insbesondere:

| | |
|---|---|
| Si: | ≤ 0,3 Gew.-% |
| Fe: | ≤ 0,4 Gew.-% |
| Cu: | ≤ 0,1 Gew.-% |
| Mn: | ≤ 0,1 Gew.-% |
| Mg: | ≤ 0,1 Gew.-% |
| Cr: | ≤ 0,12 Gew.-% |
| Zn: | ≤ 0,1 Gew.-% |
| Zr: | ≤ 0,12 Gew.-% |

gegenüber der oben genannten Aluminiumlegierung verändert.

Gemäß einer anderen weiter bevorzugten Ausführungsform des Aluminiumverbundwerkstoffs der vorliegenden Offenbarung weist die Aluminiumplattierungslegierung folgende Zusammensetzung auf:

| | |
|---|---|
| Si: | ≤ 0,25 Gew.-% |
| Fe: | ≤ 0,4 Gew.-% |
| Cu: | ≤ 0,05 Gew.-% |
| Mn: | ≤ 0,05 Gew.-% |
| Mg: | ≤ 0,05 Gew.-% |
| Zn: | ≤ 0,05 Gew.-% |
| Ti: | ≤ 0,03 Gew.-% |

wobei die Aluminiumplattierungslegierung Verunreinigungen jeweils bis maximal 0,05 Gew.-% und insgesamt bis maximal 0,15 Gew.-% aufweisen kann, wobei die verbleidenden Gew.-% Aluminium sind. Es sind also insbesondere:

| Si: | ≤ 0,25 Gew.-% |
|---|---|
| Fe: | ≤ 0,4 Gew.-% |
| Cu: | ≤ 0,05 Gew.-% |
| Mn: | ≤ 0,05 Gew.-% |
| Mg: | ≤ 0,05 Gew.-% |
| Cr: | gegebenenfalls als Verunreinigung enthalten |
| Zn: | ≤ 0,05 Gew.-% |
| Zr: | gegebenenfalls als Verunreinigung enthalten |

gegenüber der oben genannten Aluminiumlegierung verändert.

Wärmebehandlung und Zustand

Die Aluminiumlegierungen der vorliegenden Offenbarung können ihre Eigenschaften durch Unterziehen der Legierung, insbesondere in Form eines Blechs, einer Wärmebehandlung ändern. Durch Verfestigungs- bzw. Aushärtemechanismen werden die Eigenschaften, insbesondere Festigkeit, Härte und Biegewinkel, der Legierungen beeinflusst. Dabei können Warm- und Kaltwalzschritte ebenso einen Einfluss nehmen, wie Lösungsglühschritte, Halteschritte, Abkühl- oder Abschreckschritte und schließlich Auslagerungsschritte, insbesondere Warm- und Kaltauslagerungsschritte. In diesem Zusammenhang kann auf das Merkblatt W7: Wärmebehandlung von Aluminiumlegierungen, herausgegeben vom Gesamtverband der Aluminiumindustrie e.V., ISBN 978-3-937171-19-7, Version 09-2007, verwiesen werden. Die Zustände der Aluminiumlegierungen sind darüber hinaus in DIN EN 515:2017-5 definiert.

Wie bereits oben ausgeführt, kann der Aluminiumverbundwerkstoff der vorliegenden Offenbarung bevorzugt als Blech im Automobilbau Verwendung finden. Hierbei wird üblicherweise ein Blech bereitgestellt, dass im Automobilwerk durch Umformen in die gewünschte Form gebracht wird. Anschließend wird, beispielsweise während des Lackierens, das Blech einer weiteren Wärmebehandlung unterzogen. Dabei kann das Blech beispielsweise aus dem Zustand T4, in dem es an den Automobilhersteller geliefert wird, in einen Zustand nach Warmauslagern, beispielsweise in den Zustand T6, überführt werden.

Es ist daher eine bevorzugte Ausführungsform der vorliegenden Offenbarung, wenn der Aluminiumverbundwerkstoff im Zustand nach Lösungsglühen und Auslagern, weiter bevorzugt nach Warmauslagern, vorliegt.

Die Zustände nach Lösungsglühen und Auslagern können für den Fachmann eindeutig mit einer Nomenklatur TX angegeben werden, wie beispielsweise auch im Merkblatt W7 (siehe oben) und DIN EN 515:2017-5 zusammengefasst. Im Folgenden werden daher die unterschiedlichen Zustände des Aluminiumverbundwerkstoffs in dieser Form angegeben.

Die Formgebung bzw. das Umformen des Aluminiumblechs kann auch in einem Verfahren, wie es beispielsweise in der WO 2010/032002 A1 offenbart ist, erfolgen. Dabei wir das Blech zunächst auf seine Lösungstemperatur gebracht und dort lösungsgeglüht, um es dann schnell mittels eines kalten Presswerkzeugs in die endgültige Form zu pressen.

Gemäß einer bevorzugten Ausführungsform der vorliegenden Offenbarung liegt der Aluminiumverbundwerkstoff in einem Zustand nach Lösungsglühen und Kaltauslagern vor, insbesondere in einem Zustand T4, T42, T451, T4510, T4511, T452 oder T454. Der Aluminiumverbundwerkstoff liegt also bevorzugt in einem Zustand T4 mit allen "Unterzuständen" des Zustands T4, wie vorstehend beschrieben, vor. Dabei ist insbesondere der Zustand T4 bevorzugt. Das Lösungsglühen erfolgt im Allgemeinen im Temperaturbereich von 450 bis 580 °C, bevorzugt im Bereich von 500 bis 570 °C, wobei die Lösungsglühzeiten je nach vorliegender Blechdicke und Mikrostruktur 5 s bis 2 h betragen.

Gemäß einer bevorzugten Ausführungsform der vorliegenden Offenbarung liegt der Aluminiumverbundwerkstoff in einem Zustand nach Abschrecken aus der Warmformungstemperatur und Warmauslagern vor, insbesondere in einem Zustand T5, T51, oder T56. Der Aluminiumverbundwerkstoff liegt also bevorzugt in einem Zustand T5 mit allen "Unterzuständen" des Zustands T5, wie vorstehend beschrieben, vor. Dabei ist insbesondere der Zustand T5 bevorzugt. Die Warmauslagerung erfolgt hier im Allgemeinen im Temperaturbereich von 150 bis 250 °C, bevorzugt im Bereich von 180 bis 220 °C, wobei die Auslagerungszeiten je nach vorliegender Auslagerungstemperatur 5 min bis 48 h betragen.

Gemäß einer bevorzugten Ausführungsform der vorliegenden Offenbarung liegt der Aluminiumverbundwerkstoff in einem Zustand nach Lösungsglühen und Warmauslagern vor, insbesondere in einem Zustand T6, T61, T6151, T62, T64, T651, T6510, T6511, T652, T654, oder T66. Der Aluminiumverbundwerkstoff liegt also bevorzugt in einem Zustand T6 mit allen "Unterzuständen" des Zustands T6, wie vorstehend beschrieben, vor. Dabei ist insbesondere der Zustand T6 oder T64 bevorzugt. Die Warmauslagerung erfolgt hier im Allgemeinen im Temperaturbereich von 150 bis 250 °C, bevorzugt im Bereich von 180 bis 220 °C, wobei die Auslagerungszeiten je nach vorliegender Auslagerungstemperatur 5 min bis 48 h betragen.

Gemäß einer bevorzugten Ausführungsform der vorliegenden Offenbarung liegt der Aluminiumverbundwerkstoff in einem Zustand nach Lösungsglühen und Überhärten (warmausgelagert) vor, insbesondere in einem Zustand T7, T73, T732, T7351, T73510, T73511, T7352, oder T7354. Der Aluminiumverbundwerkstoff liegt also bevorzugt in einem Zustand T7 mit allen "Unterzuständen" des Zustands T7, wie vorstehend beschrieben, vor. Dabei ist insbesondere der Zustand T7 bevorzugt. Die Warmauslagerung erfolgt hier im Allgemeinen im Temperaturbereich von 150 bis 250 °C, bevorzugt im Bereich von 180 bis 220 °C, wobei die Auslagerungszeiten je nach vorliegender Auslagerungstemperatur 5 min bis 72 h betragen.

Gemäß einer bevorzugten Ausführungsform der vorliegenden Offenbarung liegt der Aluminiumverbundwerkstoff in einem Zustand, ausgewählt aus der Liste bestehend aus T4, T5, T6, T64, und T7, vor.

Eigenschaften

Die physikalischen Eigenschaften des Aluminiumverbundwerkstoffs hängen, wie oben beschrieben, von der vorhergehenden Behandlung des Werkstoffs, und daher vom jeweiligen Zustand, ab. Es kann daher notwendig sein, den Werkstoff der vorliegenden Offenbarung in einen entsprechenden Zustand zu versetzen, um die gewünschten Eigenschaften erzielen zu können. Hierbei ist insbesondere der Zustand T6, mit allen "Unterzuständen" zu nennen.

Zu den physikalischen Eigenschaften gehören insbesondere die Festigkeit (Dehngrenze) $R_{p0,2}$ und die Zugfestigkeit $R_m$ der Aluminiumverbundwerkstoffe. Sowohl die Dehngrenze $R_{p0,2}$ als auch die Zugfestigkeit $R_m$ können in Zugversuchen gemäß DIN EN ISO 6892-1:2020-06 bestimmt werden.

Ebenso gehört zu den Eigenschaften die Bruchdehnung $A_{50mm}$ und die Brucheinschnürung Z. Diese können, wie auch unten in den Beispielen ausgeführt, anhand von Blechen aus dem Aluminiumverbundwerkstoff gemäß DIN EN ISO 6892-1:2020-06 bestimmt werden.

Schließlich ist noch der Biegewinkel $\alpha$ als wichtige Eigenschaft der Aluminiumverbund-werkstoffe zu nennen. Der Biegewinkel der unterschiedlichen Bleche kann im Plättchen-Biegeversuch für metallische Werkstoffe (VDA 238-100, Prüfvorschrift vom

Juni 2017) bestimmt werden. Dabei können die Biegewinkel mit Biegelinie parallel zur Walzrichtung (RD, rolling direction) bzw. 90° zur Walzrichtung (TD, transverse direction) bestimmt werden.

Gemäß einer bevorzugten Ausführungsform der vorliegenden Offenbarung besitzt der Aluminiumverbundwerkstoff eine Festigkeit $R_{p0,2} \geq 280$ MPa, bevorzugt $R_{p0,2} \geq 290$ MPa, bevorzugt $R_{p0,2} \geq 300$ MPa, $R_{p0,2} \geq 310$ MPa, oder bevorzugt $R_{p0,2} \geq 320$ MPa.

Gemäß einer bevorzugten Ausführungsform der vorliegenden Offenbarung besitzt der Aluminiumverbundwerkstoff eine Festigkeit $R_m \geq 290$ MPa, bevorzugt $R_m \geq 300$ MPa, bevorzugt $R_m \geq 310$ MPa, $R_m \geq 320$ MPa, oder bevorzugt $R_m \geq 330$ MPa.

Gemäß einer bevorzugten Ausführungsform der vorliegenden Offenbarung besitzt der Aluminiumverbundwerkstoff einen Biegewinkel $\alpha > 70°$, bevorzugt $\alpha > 80°$, bevorzugt $\alpha > 90°$, oder bevorzugt $\alpha > 100°$.

Gemäß einer bevorzugten Ausführungsform der vorliegenden Offenbarung weist der Aluminiumverbundwerkstoff eine Bruchdehnung $A_{50mm} \geq 10$ % auf, vorzugsweise wenn er im warmausgelagerten Zustand, insbesondere im Zustand T6 mit allen seinen Unterzuständen, vorliegt.

Gemäß einer bevorzugten Ausführungsform der vorliegenden Offenbarung weist der Aluminiumverbundwerkstoff eine Brucheinschnürung Z > 50 auf, vorzugsweise wenn er im warmausgelagerten Zustand, insbesondere im Zustand T6 mit allen seinen Unterzuständen, vorliegt.

Weitere Aspekte

Ein zweiter Aspekt der vorliegenden Offenbarung betrifft einen Bestandteil eines Kraftfahrzeugs umfassend einen Aluminiumverbundwerkstoff gemäß dem ersten Aspekt mit allen seinen bevorzugten Ausführungsformen. Der Aluminiumverbundwerkstoff wie oben beschrieben kann vorteilhafterweise zu einem Blech ausgestaltet werden, das als Bestandteil eines Kraftfahrzeugs seine vorteilhaften Eigenschaften, insbesondere bei CrashAnwendungen, einbringen kann.

Schließlich betrifft ein dritter Aspekt der vorliegenden Offenbarung einen Aluminiumverbundwerkstoff-Rohling, der vorzugsweise in einem Zustand T4 mit allen Unterzuständen vorliegt, und der durch Überführen in einen Zustand nach Warmauslagern, vorzugsweise in einen Zustand T6 mit allen Unterzuständen, in einen Aluminiumverbundwerkstoff gemäß dem ersten Aspekt mit allen bevorzugten Ausführungsformen versetzt werden kann.

Es wurde bereits oben detailliert ausgeführt, dass der Zustand des Aluminiumverbundwerkstoffs einen Einfluss auf die Eigenschaften besitzen kann. So ist es möglich, dass bestimmte Werte, wie beispielsweise für die Festigkeit oder den Biegewinkel, erst nach Überführen des Verbundwerkstoffs in einen Zustand nach Warmauslagern erreicht werden. Aluminiumverbundwerkstoffe, die die physikalischen Eigenschaften der Ansprüche erst erreichen, wenn sie in einen Zustand nach Warmauslagern überführt werden, werden im Rahmen der vorliegenden Offenbarung als Rohling bezeichnet.

Die Offenbarung wurde vorstehend in ihrer allgemeinen Form beschrieben. Es ist dabei selbstverständlich, dass bevorzugte Ausführungsformen frei miteinander kombiniert werden können, insbesondere wenn diese Ausführungsformen unabhängig voneinander sind. So ist es beispielsweise selbstverständlich, dass die Aufbringung einer Plattierung auf einer oder beiden Seiten des Aluminiumkerns unabhängig von der Wahl der Legierung oder ihrer Härte ist. Die Ausführungsformen bezüglich der Aufbringung der Plattierung sind daher frei kombinierbar mit den Ausführungsformen bezüglich der Zusammensetzung der jeweiligen Legierung.

Im Folgenden wird die Offenbarung an Beispielen näher erläutert, ohne den Gegenstand dabei einschränken zu wollen. Der Schutzgegenstand der vorliegenden Offenbarung soll lediglich durch die beigefügten Ansprüche beschränkt sein.

## BEISPIELE

### Allgemeines Herstellungsverfahren für Verbundwerkstoffe

Aluminiumwalzlegierungen werden üblicherweise in geschmolzener Form zu Barren gegossen um anschließend daraus Blech- oder Plattengegenstände zu erzeugen, aus denen zahlreiche Produkte hergestellt werden können. Solche Barren werden häufig durch Strangguss (DC-Gießen, direct chill chasting) hergestellt. Die Herstellung der Barren ist jedoch darauf nicht beschränkt und jedwede Art von Herstellungsverfahren kann für die Herstellung der Ausgangsstoffe für die Aluminiumverbundwerkstoffe der vorliegenden Offenbarung verwendet werden.

Die Herstellung des Aluminiumverbundwerkstoffes kann sowohl durch ein Plattieren, insbesondere Walzplattieren, als auch ein simultanes Gießen erfolgen. Beim Walzplattieren wird zunächst der Walzbarren aus der Aluminiumkernlegierung gegossen und optional homogenisiert. Für die Aluminiumplattierungslegierungsauflagen werden die Barren der Aluminiumplattierungslegierung gegossen, erhitzt, auf die benötigte Schichtdicke warmgewalzt und auf die benötigte Länge gebracht. Die Aluminiumplattierungsauflagen können alternativ durch Sägen aus einem gegossenen Walzbarren hergestellt werden. Im Anschluss werden die Aluminiumplattierungslegierungsauflagen mit dem Aluminiumkernlegierungsbarren zu einem Paket zusammengesetzt und auf Warmwalztemperatur erwärmt. Das Walzplattieren kann zunächst als Warmwalzen erfolgen, gefolgt von einem Kaltwalzen, bevorzugt ohne Zwischenglühung.

### Allgemeines Herstellungsverfahren für unplattierte Vergleichsbleche

Ein Aluminiumbarren wird auf analoge Weise, wie oben für das Herstellungsverfahren der Barren der Aluminiumkernlegierung für die Verbundstoffe dargestellt, hergestellt. Nach der Homogenisierung wird der Barren vorgeschwärmt, warmgewalzt und schließlich kaltgewalzt ohne Zwischenglühung.

### Bestimmung der Härte nach Vickers

Für die Bleche wurde die Härteprüfung nach Vickers gemäß DIN EN ISO 6507-1:2018-07 durchgeführt. Die Ergebnisse sind als "HV 0,025" angegeben.

### Beispiel 1: Herstellung eines plattierten Verbundwerkstoffs mit hochfester AlMgSi-Legierung als Kern

Ein Aluminiumkernbarren bestehend aus einer hochfesten AlMgSi- bzw. 6xxx-Legierung (hier: Typ AA 6010) sowie ein Aluminiumplattierungsbarren bestehend aus einer AlFe- bzw. 8xxx-Legierung (hier: Typ AA 8079) werden mittels DC-Guss mit den folgenden Zusammensetzungen gegossen:

| Legierung | Si | Fe | Cu | Mn | Mg | Zn |
|---|---|---|---|---|---|---|
| AlMgSi-Kern | 0,99 | 0,35 | 0,25 | 0,52 | 0,78 | 0,15 |
| AlFe-Plattierung | 0,05 | 0,83 | 0,001 | 0,003 | 0,008 | 0,0016 |

Die Angaben in obiger Tabelle sind in Gew.-%, bezogen auf das Gesamtgewicht, wobei der verbleibende Anteil auf Verunreinigungen und Aluminium entfällt.

Der Plattier-Barren wird auf 525 °C vorgewärmt und auf eine Dicke von 10 % des Kern-Barrens warmgewalzt. Anschließend erfolgt ein Weichglühen bei 350 °C der Plattierauflagen. Die erzeugten Plattierauflagen werden abschließend auf die benötigte Länge abgelängt.

Der Kernbarren wird bei 575 °C homogenisiert. Anschließend werden die wie oben hergestellten Plattierauflagen zum Aufbau des Pakets auf beiden Seiten des Kernbarrens aufgebracht. Nach Vorwärmen des Pakets auf 470 °C erfolgt ein Warmwalzen in mehreren Stichen auf eine Warmbanddicke von 8,5 mm, gefolgt von einem Kaltwalzen in mehreren Stichen eine Kaltbanddicke von 2 mm ohne Zwischenglühung. Der Aluminiumverbundwerkstoff hat eine Gesamtdicke von 2 mm, wobei jeweils 0,2 mm auf die beiden Aluminiumbeschichtungen entfallen. Es entfallen also 80 % der Dicke auf den Kern und jeweils 10 % auf die beiden Plattierungen. Der derart hergestellte Aluminiumverbundwerkstoff befindet sich in einem walzharten Zustand und muss zur Erlangung der benötigen Festigkeiten lösungsgeglüht, abgeschreckt (Zustand T4) und warmausgelagert werden.

Folglich wird der Werkstoff durch Lösungsglühen und Auslagern in den Zustand T6 versetzt. Dazu wird der Werkstoff für 5 Minuten bei 565 °C lösungsgeglüht und dann mit Wasser abgeschreckt (Zustand T4). Zum Auslagern wurde der Werkstoff bei Raumtemperatur um 5 % durch Recken quer zur Walzrichtung gedehnt und anschließend über eine 30-minütige Glühung bei 205 °C warmausgelagert (Zustand T6). In diesem Zustand weist die Kernlegierung des Verbundwerkstoffes eine Härte $H_{Kern}$ = 138 HV 0,025 auf, während die Plattierschichten des Verbundwerkstoffes eine Härte $H_{Plattierung}$ = 28 HV 0,025 aufweisen. Daraus ergibt sich der Faktor Q = 5.

Vergleichsbeispiel 1: Herstellung eines monolagigen Aluminiumblechs aus einer hochfesten AlMgSi-Legierung

Zum Vergleich wird ein monolagiges Aluminiumblech aus einer hochfesten AlMgSi-Legierung (hier: Typ AA 6010, Zusammensetzung wie in Beispiel 1) hergestellt. Zunächst wird die Aluminiumlegierung mittels DC-Gießverfahren in einen Kernbarren gegossen.

Nach Homogenisieren des Barrens bei 575 °C wird der Barren auf 470 °C vorgewärmt und auf 8,5 mm warmgewalzt, bevor er in mehreren Stichen auf 2 mm ohne Zwischenglühen kaltgewalzt wird.

Abschließend wird der Werkstoff durch Lösungsglühen und Auslagern in den Zustand T6 versetzt. Dazu wird der Werkstoff für 5 Minuten bei 565 °C lösungsgeglüht und dann mit Wasser abgeschreckt (Zustand T4). Zum Auslagern wurde der Werkstoff bei Raumtemperatur um 5% durch Recken quer zur Walzrichtung gedehnt und anschließend über eine 30-minütige Glühung bei 205 °C warmausgelagert (Zustand T6).

Beispiel 3: Herstellung eines plattierten Verbundwerkstoffs mit AlZnMg-Legierung als Kern

Ein Aluminiumkernbarren bestehend aus einer AlZnMg- bzw. 7xxx-Legierung (hier: Typ AA 7021) sowie ein Aluminiumplattierungsbarren bestehend aus einer 1xxx-Legierung (hier: Typ AA 1050) werden mittels DC-Guss mit den folgenden Zusammensetzungen gegossen:

| Legierung | Si | Fe | Cu | Mn | Mg | Zn |
|---|---|---|---|---|---|---|
| AlZnMg-Kern | 0,05 | 0,08 | 0,21 | 0,052 | 1,65 | 5,76 |
| 1xxx- Plattierung | 0,03 | 0,24 | 0,001 | 0,001 | 0,001 | 0,002 |

Die Angaben in obiger Tabelle sind in Gew.-%, bezogen auf das Gesamtgewicht, wobei der verbleibende Anteil auf Verunreinigungen und Aluminium entfällt.

Der Plattier-Barren wird auf 525 °C vorgewärmt und anschließend auf eine Dicke 10 % des Kern-Barrens warmgewalzt. Anschließend erfolgt ein Weichglühen bei 350 °C der generierten Plattierauflagen. Die erzeugten Plattierauflagen werden abschließend auf die benötigte Länge abgelängt.

Der Kernbarren wird bei 480 °C homogenisiert. Anschließend werden die wie oben hergestellten Plattierauflagen zum Aufbau des Pakets auf beiden Seiten des Kernbarrens aufgebracht. Nach Vorwärmen des Schichtaufbaus auf 470 °C erfolgt ein Warmwalzen in mehreren Stichen eine Warmbanddicke von 8 mm, gefolgt von einem Kaltwalzen in mehreren Stichen auf eine Kaltbanddicke von 2 mm ohne Zwischenglühung. Der Aluminiumverbundwerkstoff hat eine Gesamtdicke von 2 mm, wobei jeweils 0,2 mm auf die beiden Aluminiumbeschichtungen entfallen. Es entfallen also 80 % der Dicke auf den Kern und jeweils 10 % auf die beiden Plattierungen. Der derart hergestellte Aluminiumverbundwerkstoff befindet sich in einem walzharten Zustand und muss zur Erlangung der benötigen Festigkeiten lösungsgeglüht, abgeschreckt (Zustand T4) und warmausgelagert werden.

Abschließend wird der Werkstoff durch Lösungsglühen und Auslagern in den Zustand T6 versetzt. Dazu wird der Werkstoff für 5 Minuten bei 510 °C lösungsgeglüht und dann in ruhender Luft abgekühlt (Zustand T4). Nach einer Woche Lagerung bei Raumtemperatur (25 °C / Zustand T4) wird der Werkstoff zum Auslagern über 8 Stunden bei 90 °C gehalten, mit 1 °C/min auf 145 °C erwärmt und und anschließend weitere 8 Stunden bei 145 °C gehalten und somit in den Zustand T6 überführt. In diesem Zustand weist die Kernlegierung des Verbundwerkstoffes eine Härte $H_{Kern}$ = 148 HV 0,025 auf, während die Plattierschichten des Verbundwerkstoffes eine Härte $H_{Plattierung}$ = 22 HV 0,025 aufweisen.

Daraus ergibt sich der Faktor Q = 6.7.

Vergleichsbeispiel 4: Herstellung eines monolagigen Aluminiumblechs aus einer AlZnMg-Legierung

Zum Vergleich wird ein monolagiges Aluminiumblech aus einer AlZnMg-Aluminiumlegierung (hier: Typ AA 7021, Zusammensetzung wie in Beispiel 3) hergestellt. Zunächst wird die Aluminiumlegierung mittels DC-Gießverfahren in einen Kernbarren gegossen.
Nach Homogenisieren des Barrens bei 480 °C wird der Barren in mehreren Stichen auf eine Warmbanddicke von 8,5 mm warmgewalzt, bevor er in mehreren Stichen auf eine Kaltbanddicke von 2 mm ohne Zwischenglühen kaltgewalzt wird.
Abschließend wird der Werkstoff durch Lösungsglühen und Auslagern in den Zustand T6 versetzt. Dazu wird der Werkstoff für 5 Minuten bei 565 °C lösungsgeglüht und dann mit Wasser abgeschreckt (Zustand T4). Nach einer Woche lagern bei Raumtemperatur (25 °C, Zustand T4)) wird der Werkstoff zum Auslagern über 8 Stunden bei 90 °C gehalten, mit 1 °C/min auf 145 °C erwärmt und anschließend weitere 8 Stunden bei 145 °C gehalten und somit in den Zustand T6 überführt.

Vergleichsbeispiel 5: Herstellung eines plattierten Verbundwerkstoffs mit geringer Härte unter Verwendung einer mittelfesten AlMgSi-Legierung als Kern

Ein Aluminiumkernbarren bestehend aus einer mittelfesten AlMgSi- bzw. 6xxx-Legierung (hier: Typ AA 6016) sowie ein Aluminiumplattierungsbarren bestehend aus einer AlFe- bzw. 8xxx-Legierung (hier: Typ AA 8079) werden mittels DC-Guss mit den folgenden Zusammensetzungen gegossen:

| Legierung | Si | Fe | Cu | Mn | Mg | Zn |
|---|---|---|---|---|---|---|
| AlMgSi-Kern | 1,30 | 0,20 | < 0,01 | 0,07 | 0,30 | 0,20 |
| AlFe-Plattierung | 0,05 | 0,83 | 0,001 | 0,003 | 0,008 | 0,0016 |

Die Angaben in obiger Tabelle sind in Gew.-%, bezogen auf das Gesamtgewicht, wobei der verbleibende Anteil auf Verunreinigungen und Aluminium entfällt.
Die erzeugten Plattierauflagen wurden mittels Sägen aus einem Plattierungslegierungsbarren mit einer Dicke von 13 % des Kernbarren entnommen.
Der Kernbarren wird bei 575 °C homogenisiert. Anschließend werden die wie oben beschrieben hergestellten Plattierauflagen zum Aufbau des Pakets auf beiden Seiten des Kernbarrens aufgebracht. Nach Vorwärmen des Pakets auf 470 °C erfolgt ein Warmwalzen in mehreren Stichen auf eine Warmbanddicke von 6,8 mm, gefolgt von einem Kaltwalzen in mehreren Stichen eine Kaltbanddicke von 1.15 mm. Der Aluminiumverbundwerkstoff hat eine Gesamtdicke von 1.15mm, wobei jeweils 0.15mm auf die beiden Aluminiumbeschichtungen entfallen. Es entfallen also 74 % der Dicke auf den Kern und jeweils 26 % auf die beiden Plattierungen. Der derart hergestellte Aluminiumverbundwerkstoff befindet sich in einem walzharten Zustand und muss zur Erlangung der benötigen Festigkeiten lösungsgeglüht, abgeschreckt (Zustand T4) und warmausgelagert werden.
Folglich wird der Werkstoff durch Lösungsglühen und Auslagern in den Zustand T6 versetzt. Dazu wird der Werkstoff für 5 Minuten bei 565 °C lösungsgeglüht und dann mit Wasser abgeschreckt (Zustand T4). Zum Auslagern wurde der Werkstoff bei Raumtemperatur um 5 % durch Recken quer zur Walzrichtung gedehnt und anschließend über eine 30-minütige Glühung bei 205 °C warmausgelagert (Zustand T6). In diesem Zustand weist die Kernlegierung des Verbundwerkstoffes eine Härte $H_{Kern}$ = 96 HV 0,025 auf, während die Plattierschichten des Verbundwerkstoffes eine Härte $H_{Plattierung}$ = 33 HV 0,025 aufweisen. Daraus ergibt sich der Faktor Q = 2.9.
Dieser Verbundwerkstoff stellt ein Vergleichsbeispiel zur WO 2014/068015 A1 dar. Die Härte der Aluminiumkernlegierung ist unterhalb der beanspruchten HV von 110, wodurch die Festigkeit des Verbundwerkstoffs geringer ausfällt. Darüber hinaus ist der Faktor Q < 3.

Beispiel 6: Bestimmung des Biegewinkels

Der Biegewinkel der unterschiedlichen Bleche wurde im Plättchen-Biegeversuch für metallische Werkstoffe (VDA 238-100, Prüfvorschrift vom 1. Juli 2017) im Zustand T6 bestimmt. Unten angegeben sind die Biegewinkel mit Biegelinie parallel zur Walzrichtung (RD, rolling direction) bzw. senkrecht zu Walzrichtung (TD, transverse direction).

|  | Biegewinkel [°] RD | Biegewinkel [°] TD |
|---|---|---|
| Beispiel 1 | 103,4 | 104,2 |
| Vergleichsbeispiel 1 | 51,8 | 56,2 |
| Beispiel 3 | 81,3 | 106,4 |
| Vergleichsbeispiel 4 | 53,3 | 64,3 |

Wie aus den obigen Versuchsergebnissen ersichtlich ist, besitzen die Verbundwerkstoffe der vorliegenden Offenbarung einen gegenüber den Vergleichsbeispielen stark erhöhten Biegewinkel. Dies zeigt die erhöhte Stabilität der Verbundwerkstoffe.

Beispiel 7: Bestimmung der Festigkeit $R_{p0.2}$ und $R_m$

Der Festigkeit (Dehngrenze) $R_{p0,2}$ und die Zugfestigkeit $R_m$ der unterschiedlichen Bleche wurden in Zugversuchen gemäß DIN EN ISO 6892-1:2020-06 bestimmt.

|  | $R_{p0,2}$ [MPa] RD | $R_{p0,2}$ [MPa] TD | $R_m$ [MPa] RD | $R_m$ [MPa] TD |
|---|---|---|---|---|
| Beispiel 1 | 296 | 290 | 310 | 305 |
| Vergleichsbeispiel 1 | 360 | 355 | 371 | 366 |
| Beispiel 3 | 327 | 335 | 365 | 378 |
| Vergleichsbeispiel 4 | 386 | 391 | 426 | 436 |
| Vergleichsbeispiel 5 | 190 | 186 | 222 | 216 |

Während die Festigkeitswerte der Verbundwerkstoffbleche aus den Beispielen 1 und 3 unter den Werten der monolagigen Vergleichsversuche 2 und 4 liegen, sind sie jedoch gegenüber Vergleichsbeispiel 5 deutlich erhöht.

Beispiel 8: Bestimmung der Bruchdehnung $A_{50mm}$ und der Brucheinschnürung Z

Der Bruchdehnung $A_{50mm}$ und die Brucheinschnürung Z der unterschiedlichen Bleche wurden DIN EN ISO 6892-1:2020-06 bestimmt.

|  | $A_{50}$mm [%] RD | $A_{50}$mm [%] TD | Z [%] RD | Z [%] TD |
|---|---|---|---|---|
| Beispiel 1 | 10,5 | 10,5 | 58 | 58 |
| Vergleichsbeispiel 1 | 10,3 | 12 | 42 | 45 |
| Beispiel 3 | 13,8 | 14,5 | 51 | 48 |
| Vergleichsbeispiel 4 | 14,8 | 14,3 | 40 | 37 |

Aus der Bestimmung der Bruchdehnung und der Brucheinschnürung lässt sich erkennen, dass die Verbundwerkstoffe der Beispiele 1 und 3 bei der Bruchdehnung in vergleichbaren Bereichen wie für die Vergleichsbeispiele 2 und 4 liegen, die Brucheinschnürung jedoch bei den Beispiele 1 und 3 deutlich bessere Ergebnisse liefert.

Zusammenfassend lässt sich festhalten, dass die Versuche deutlich zeigen, dass die Bleche der Verbundwerkstoffe der vorliegenden Offenbarung eine ausreichende wenn auch gegenüber den monolagigen Blechen geringere Festigkeit aufweisen, jedoch beim Biegewinkel und der Brucheinschnürung deutlich verbesserte Werte zeigen. Diese Eigenschaftskombination ermöglicht den Einsatz der Verbundwerkstoffe als Bleche beispielsweise im Automobilbau, da sie vorteilhafte Eigenschafen beispielsweise bei Crash-Tests erwarten lassen.

**Patentansprüche**

1. Aluminiumverbundwerkstoff umfassend

   - einen Aluminiumkern mit einer Aluminiumkernlegierung und
   - eine ein- oder beidseitig auf dem Aluminiumkern aufgebrachte Aluminiumplattierung mit einer Aluminiumplattierungslegierung,

   wobei

   - die Aluminiumkernlegierung eine Härte ≥ 110 HV 0,025 aufweist,
   - die Aluminiumplattierungslegierung eine Härte ≤ 50 HV 0,025 aufweist,
   - das Verhältnis der Härte der Aluminiumkernlegierung zur Härte der Aluminiumplattierungslegierung ≥ 3 ist, und
   - die Aluminiumplattierung jeweils eine Dicke von 5-20 % der Gesamtdicke des Verbundwerkstoffes aufweist.

2. Aluminiumverbundwerkstoff gemäß Anspruch 1, wobei der Aluminiumverbundwerkstoff im Zustand nach Lösungsglühen und Auslagern vorliegt, bevorzugt nach Warmauslagern.

3. Aluminiumverbundwerkstoff gemäß einem der vorhergehenden Ansprüche, wobei der Aluminiumverbundwerkstoff eine Festigkeit $R_{p0,2}$ ≥ 280 MPa, bevorzugt $R_{p0,2}$ ≥ 290 MPa, bevorzugt $R_{p0,2}$ ≥ 300 MPa, bevorzugt $R_{p0,2}$ ≥ 310 MPa, bevorzugt $R_{p0,2}$ ≥ 320 MPa und/oder einen Biegewinkel α > 70°, bevorzugt α > 80°, bevorzugt α > 90°, bevorzugt α > 100° aufweist.

4. Aluminiumverbundwerkstoff gemäß einem der vorhergehenden Ansprüche, wobei die Aluminiumkernlegierung vom Typ AA 2xxx, AA 6xxx oder AA 7xxx, bevorzugt vom Typ AA 6xxx oder AA 7xxx ist, und/oder wobei die Aluminiumplattierungslegierung vom Typ AA 8xxx, AA 7xxx, AA 3xxx oder AA 1xxx ist, bevorzugt vom Typ AA 8xxx oder AA 1xxx ist.

5. Aluminiumverbundwerkstoff gemäß einem der vorhergehenden Ansprüche, wobei die Aluminiumkernlegierung die folgende Zusammensetzung aufweist:

   | | |
   |---|---|
   | Si: | 0,03 - 1,5 Gew.-% |
   | Fe: | ≤ 0,5 Gew.-% |
   | Cu: | ≤ 2,0 Gew.-% |
   | Mn: | ≤ 1,2 Gew.-% |
   | Mg: | 0,4 - 2,5 Gew.-% |
   | Cr: | ≤ 0,2 Gew.-% |
   | Zn: | ≤ 7,5 Gew.-% |
   | Zr: | ≤ 0,2 Gew.-% |

   wobei die Aluminiumkernlegierung Verunreinigungen jeweils bis maximal 0,05 Gew.-% und insgesamt bis maximal 0,15 Gew.-% aufweisen kann, wobei die verbleidenden Gew.-% Aluminium sind, bevorzugt
   wobei der Anteil an Silizium (Si) mindestens 0,6 Gew.-% beträgt, weiter bevorzugt mindestens 0,65 Gew.-%, und noch weiter bevorzugt mindestens 0,7 Gew.-%; und/oder wobei der Anteil an Mangan (Mn) mindestens 0,2 Gew.-% beträgt, weiter bevorzugt mindestens 0,25 Gew.-%, und noch weiter bevorzugt mindestens 0,3 Gew.-%.

6. Aluminiumverbundwerkstoff gemäß Anspruch 5, wobei die Aluminiumkernlegierung insbesondere die folgenden Anteile aufweist:

   | | |
   |---|---|
   | Si: | 0,5 - 1,5 Gew.-% |
   | Fe: | 0,01 - 0,5 Gew.-% |
   | Cu: | ≤ 1,0 Gew.-% |
   | Mn: | 0,01 - 1,2 Gew.-% |
   | Mg: | 0,5 - 1,5 Gew.-% |
   | Zn: | ≤ 0,8 Gew.-%, |

bevorzugt wobei die Aluminiumkernlegierung, die einen hohen Schrotteinsatz erlaubt, insbesondere die folgenden Anteile aufweist:

| | |
|---|---|
| Si: | 0,5 - 1,5 Gew.-% |
| Fe: | 0,15 - 0,5 Gew.-% |
| Cu: | 0,03 - 1,0 Gew.-% |
| Mn: | 0,15 - 1,2 Gew.-% |
| Mg: | 0,5 - 1,5 Gew.-% |
| Zn: | ≤ 0,8 Gew.-% |

wobei die Aluminiumkernlegierung Verunreinigungen jeweils bis maximal 0,05 Gew.-% und insgesamt bis maximal 0,15 Gew.-% aufweisen kann, wobei die verbleidenden Gew.-% Aluminium sind.

7. Aluminiumverbundwerkstoff gemäß einem der vorhergehenden Ansprüche, wobei die Aluminiumplattierungslegierung die folgende Zusammensetzung aufweist:

| | |
|---|---|
| Si: | ≤ 1,5 Gew.-% |
| Fe: | ≤ 2,0 Gew.-%, vorzugsweise 0,1 - 2,0 Gew.-% |
| Cu: | ≤ 0,3 Gew.-% |
| Mn: | ≤ 1,5 Gew.-% |
| Mg: | ≤ 2,5 Gew.-% |
| Cr: | ≤ 0,2 Gew.-% |
| Zn: | ≤ 2,0 Gew.-% |
| Ti: | ≤ 0,3 Gew.-% |
| Zr: | ≤ 0,2 Gew.-% |

wobei die Aluminiumplattierungslegierung Verunreinigungen jeweils bis maximal 0,05 Gew.-% und insgesamt bis maximal 0,15 Gew.-% aufweisen kann, wobei die verbleidenden Gew.-% Aluminium sind.

8. Aluminiumverbundwerkstoff gemäß Anspruch 7, wobei die Aluminiumplattierungslegierung insbesondere die folgenden Anteile aufweist:

| | |
|---|---|
| Mg: | ≤ 1,0 Gew.-% |
| Cr: | ≤ 0,12 Gew.-% |
| Zn: | ≤ 0,5 Gew.-% |
| Zr: | ≤ 0,12 Gew.-% |

oder wobei die Aluminiumplattierungslegierung insbesondere die folgenden Anteile aufweist:

| | |
|---|---|
| Si: | ≤ 0,3 Gew.-% |
| Fe: | ≤ 0,4 Gew.-% |
| Cu: | ≤ 0,1 Gew.-% |
| Mn: | ≤ 0,1 Gew.-% |
| Mg: | ≤ 0,1 Gew.-% |
| Cr: | ≤ 0,12 Gew.-% |
| Zn: | ≤ 0,05 Gew.-% |
| Zr: | ≤ 0,12 Gew.-% |

oder wobei die Aluminiumplattierungslegierung insbesondere die folgenden Anteile aufweist:

| | |
|---|---|
| Si: | ≤ 0,25 Gew.-% |
| Fe: | ≤ 0,4 Gew.-% |
| Cu: | ≤ 0,05 Gew.-% |

(fortgesetzt)

| Mn: | $\leq 0{,}05$ Gew.-% |
| Mg: | $\leq 0{,}05$ Gew.-% |
| Zn: | $\leq 0{,}05$ Gew.-% |
| Ti: | $\leq 0{,}03$ Gew.-% |

wobei die Aluminiumplattierungslegierung Verunreinigungen jeweils bis maximal 0,05 Gew.-% und insgesamt bis maximal 0,15 Gew.-% aufweisen kann, wobei die verbleidenden Gew.-% Aluminium sind.

9. Aluminiumverbundwerkstoff gemäß einem der vorhergehenden Ansprüche, wobei der Aluminiumverbundwerkstoff eine Bruchdehnung $A_{50mm} \geq 10$ % aufweist, vorzugsweise wenn er im warmausgelagerten Zustand, insbesondere im Zustand T6, vorliegt.

10. Aluminiumverbundwerkstoff gemäß einem der vorhergehenden Ansprüche, wobei der Aluminiumverbundwerkstoff eine Brucheinschnürung Z > 50 aufweist, vorzugsweise wenn er im Zustand, insbesondere im Zustand T6, vorliegt.

11. Aluminiumverbundwerkstoff gemäß einem der vorhergehenden Ansprüche, wobei der Aluminiumverbundwerkstoff eine Gesamtdicke von 0,6 mm bis 10 mm, vorzugsweise von 1,0 mm bis 5 mm aufweist.

12. Aluminiumverbundwerkstoff gemäß einem der vorhergehenden Ansprüche, wobei das Verhältnis der Härte der Aluminiumkernlegierung zur Härte der Aluminiumplattierungslegierung im Bereich von 4,5 bis 5,5 liegt, vorzugsweise wenn er im Zustand T6 vorliegt; und/oder

   wobei die Härte der Aluminiumkernlegierung mindestens 120 HV 0,025, weiter bevorzugt mindestens 130 HV 0,025 beträgt; und/oder
   wobei die Härte der Aluminiumkernlegierung höchstens 170 HV 0,025 beträgt, weiter bevorzugt höchstens 160 HV 0,025, weiter bevorzugt höchstens 155 HV 0,025, und noch weiter bevorzugt höchstens 150 HV 0,025.

13. Aluminiumverbundwerkstoff gemäß einem der vorhergehenden Ansprüche, wobei die Aluminiumplattierung jeweils eine Dicke von 7 bis 15 % der Gesamtdicke des Verbundwerkstoffes aufweist.

14. Bestandteil eines Kraftfahrzeugs umfassend einen Aluminiumverbundwerkstoff gemäß einem der vorhergehenden Ansprüche.

15. Aluminiumverbundwerkstoff-Rohling, der vorzugsweise in einem Zustand T4 vorliegt, und der durch Überführen in einen Zustand nach Warmauslagern, vorzugsweise in einen Zustand T6, in einen Aluminiumverbundwerkstoff gemäß einem der Ansprüche 1 bis 13 umgewandelt werden kann.

**EP 3 970 964 A1**

Europäisches Patentamt
European Patent Office
Office européen des brevets

# EUROPÄISCHER RECHERCHENBERICHT

**Nummer der Anmeldung**

**EP 21 19 6932**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 601 00 724 T2 (PECHINEY RHENALU PARIS [FR]) 8. Juli 2004 (2004-07-08) <br> * Absatz [0001] * <br> * Absatz [0021] * <br> * Beispiel 2 * <br> * Beispiel 4 * <br> * Tabelle 4 * <br> * Abbildung 1 * <br> ----- | 1-14 | INV. <br> B32B15/01 <br> C22C21/04 <br> C22C21/08 <br> C22C21/10 |
| X | US 2018/304584 A1 (KAMAT RAJEEV G [US] ET AL) 25. Oktober 2018 (2018-10-25) <br> * Zusammenfassung * <br> * Beispiel 1 * <br> * Beispiel 1; Tabelle 7 * <br> * Beispiel 6; Tabelle 7 * <br> * Beispiel C; Tabelle 8 * <br> ----- | 15 | |
| A | EP 1 557 260 A2 (ERBSLOEH ALUMINIUM GMBH [DE]) 27. Juli 2005 (2005-07-27) <br> * Zusammenfassung * <br> ----- | 1-15 | |
| A | DE 20 2007 018795 U1 (ALERIS ALUMINUM DUFFEL BVBA [BE]) 2. Juli 2009 (2009-07-02) <br> * Zusammenfassung * <br> ----- | 1-15 | RECHERCHIERTE SACHGEBIETE (IPC) <br><br> B32B <br> C22C |

Der vorliegende Recherchenbericht wurde für alle Patentansprüche erstellt

| Recherchenort | Abschlußdatum der Recherche | Prüfer |
|---|---|---|
| Den Haag | 19. Januar 2022 | Rosciano, Fabio |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 19 6932

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2022

| Im Recherchenbericht angeführtes Patentdokument | Datum der Veröffentlichung | Mitglied(er) der Patentfamilie | Datum der Veröffentlichung |
|---|---|---|---|
| DE 60100724 T2 | 08-07-2004 | DE 60100724 T2 | 08-07-2004 |
| | | EP 1170118 A1 | 09-01-2002 |
| | | FR 2811337 A1 | 11-01-2002 |
| | | US 2002031682 A1 | 14-03-2002 |
| US 2018304584 A1 | 25-10-2018 | CA 3061497 A1 | 01-11-2018 |
| | | CN 110545999 A | 06-12-2019 |
| | | EP 3615329 A1 | 04-03-2020 |
| | | JP 2020517828 A | 18-06-2020 |
| | | KR 20200002966 A | 08-01-2020 |
| | | US 2018304584 A1 | 25-10-2018 |
| | | US 2020307160 A1 | 01-10-2020 |
| | | WO 2018200355 A1 | 01-11-2018 |
| EP 1557260 A2 | 27-07-2005 | DE 102004002840 A1 | 11-08-2005 |
| | | EP 1557260 A2 | 27-07-2005 |
| DE 202007018795 U1 | 02-07-2009 | BR PI0711082 A2 | 23-08-2011 |
| | | CN 101437677 A | 20-05-2009 |
| | | DE 202007018795 U1 | 02-07-2009 |
| | | EP 1852250 A1 | 07-11-2007 |
| | | EP 2013012 A1 | 14-01-2009 |
| | | EP 2052851 A1 | 29-04-2009 |
| | | FR 2900664 A1 | 09-11-2007 |
| | | FR 2926564 A1 | 24-07-2009 |
| | | HU E042125 T2 | 28-06-2019 |
| | | JP 5079791 B2 | 21-11-2012 |
| | | JP 2009535510 A | 01-10-2009 |
| | | KR 20090013771 A | 05-02-2009 |
| | | US 2009202860 A1 | 13-08-2009 |
| | | WO 2007128391 A1 | 15-11-2007 |

EPO FORM P0461

Für nähere Einzelheiten zu diesem Anhang : siehe Amtsblatt des Europäischen Patentamts, Nr.12/82

**EP 3 970 964 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014068015 A1
- WO 2010032002 A1